# EUROPEAN PATENT APPLICATION

(11) **EP 1 715 430 A1**
(43) Date of publication of application: **25.10.2006**
(21) Application number: 05103046.8
(22) Date of filing: 18.04.2005
(51) Int. Cl.: G06F 17/30

(54) **System and method for exposing a synchronous web service as a notification web service**

(71) Applicant: Research In Motion Limited, Waterloo, Ontario N2L 3W8 (CA)
(72) Inventor: Wetherly, Curtis, L6H 5G4, Oakville (CA); Bateman, Cameron, M4Y 1R2, Toronto (CA)
(74) Representative: Rickard, David John

(57) **Abstract**

A method for exposing a synchronous worldwide web service (18a) as a notification web service includes polling a synchronous web server (18a) at a predetermined frequency, and forwarding selected responses (222) in notification messages (232) to service subscribers (10a). A system for performing the method may include a subscription manager (100) that serves as a client subscription interface, a polling manager (102) for polling (218) the synchronous web server, a filter manager (104) for filtering responses received from the synchronous web service, and a notification manager (106) for forwarding notification messages (232) to the service subscriber. The various managers may be instantiated on one or more servers (108) operated by a notification service provider.

## Description

This application relates in general to asynchronous worldwide web services and, in particular, to a system and method of exposing a synchronous worldwide web service as a notification web service.

The acceptance of wireless devices as a preferred personal communications medium has created a growing demand for such devices. Users of such devices also increasingly expect more functionality and a broader range of services to be made available through such devices. Not only is there demand for more functionality, there is also a demand for more flexible services, such as notification web services that automatically deliver information to such devices.

As is well understood in the art, most worldwide web services are synchronous services that respond synchronously to request messages sent by service users accessing the web service. However, it is well understood in the art that many synchronous web services provide information that frequently changes or is frequently updated. Since most users do not have the time or inclination to frequently visit synchronous web services in order to retrieve useful information that they may require or desire, there exists a need for a system and method of exposing a synchronous worldwide web service as a notification worldwide web service.

It is known in the art to expose synchronous worldwide web services as notification web services. However, current methods for exposing a synchronous web service as a notification web service requires that a unique front-end for each synchronous web service be created. As is well understood in the art this requires considerable effort and greatly increases expense of providing such service.

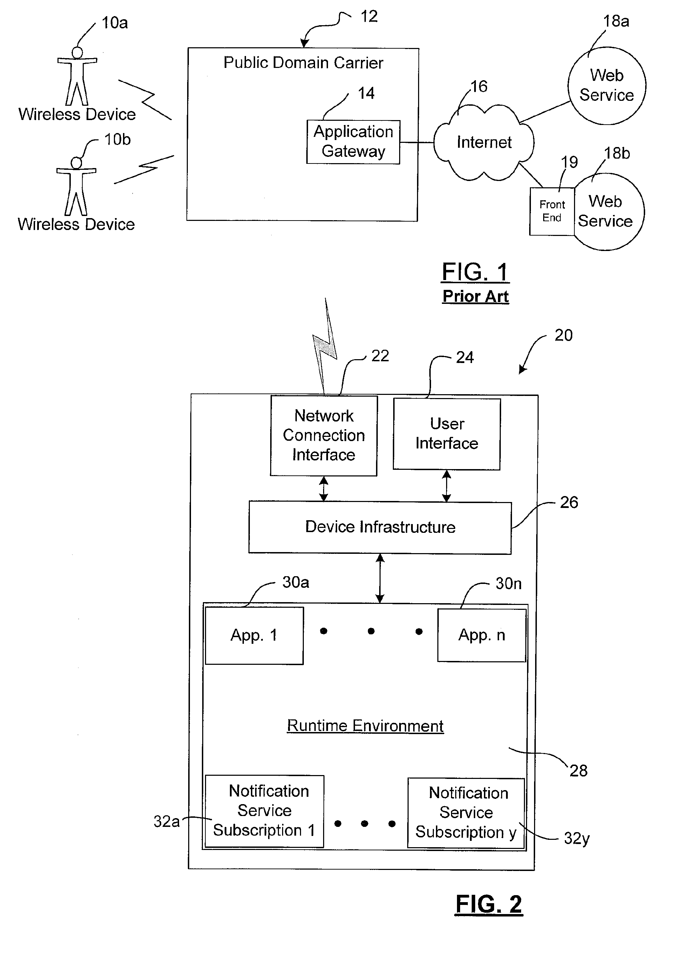

Fig. 1 is a schematic diagram of a prior art network in which wireless devices 10a, 10b send and receive messages through a public domain carrier 12. An application gateway 14 in the public domain carrier network receives messages sent by the wireless devices 10a, 10b and forwards those messages through the internet 16 to a web service 18a, 18b to which the messages are addressed. As is well understood in the art, request messages sent to the web services 18a, 18b elicit synchronous responses. Synchronous web service 18b is provided with a front end 19 that is adapted to be provisioned with subscription information and query the synchronous web service 18b for information that is sent as notification messages to the wireless devices 10a, 10b. As noted above, the creation of the front end 19 is labour intensive and expensive.

There therefore exists a need for a system and method for exposing a synchronous web service as a notification web service without the requirement of building a unique front end for each synchronous service to be exposed as a notification web service.

The invention preferably provides a system and method for exposing a synchronous web service as a notification web service.

In accordance with one aspect of the invention, there is provided a method for exposing a synchronous web service as a notification web service, comprising polling the synchronous web service from a notification service provider server at a predetermined frequency using predetermined request data to obtain response messages from the synchronous web service; determining at the notification service provider server whether a response message received from the synchronous web service meets a predefined criteria; and forwarding from the notification service provider server a notification message to the subscriber each time a response message meets the predefined criteria.

In accordance with another aspect of the present invention, there is provided a system for exposing a synchronous worldwide web service as a notification web service, comprising at least one notification service provider server that sends service request messages to the synchronous web service and receives responses from the synchronous web service, and sends notification messages to a service subscriber based on the responses received by the polling manager.

In accordance with yet another aspect of the present invention there is provided a system for exposing a synchronous worldwide web service as a notification web service, comprising a subscription manager that receives subscription messages from a service subscriber and sends subscription responses to the service subscriber, and forwards subscription information to a polling manager to permit the polling manager to create service request messages; the polling manager sends the service request messages to the synchronous web service and receives responses from the synchronous web service; a filter manager that determines when a response message is to be forwarded to the service subscriber; and a notification manager that receives selected response messages from the filter manager and forwards response messages to the service subscriber.

### BRIEF DESCRIPTION OF THE DRAWINGS

Further features and advantages of the present invention will become apparent from the following detailed description, taken in combination with the appended drawings, in which:

Fig. 1 is a schematic diagram of a prior art network that exposes a synchronous web service as a notification web service using a custom front end;

Fig. 2 is a schematic diagram of a wireless device provisioned with subscription service data in accordance with the invention;

Fig. 3 is a flow diagram characterizing steps of a method performed by the wireless device shown in Fig. 2 to access a notification service in accordance with the invention;

Fig. 4 is a flow diagram characterizing principle steps performed by a notification service provider using a method in accordance with the invention for exposing a synchronous web service as a notification web service;

Fig. 5 is a schematic diagram of one embodiment of a system for providing a notification web service in accordance with the invention; and

Fig. 6 is a message flow diagram characterizing principle messages exchanged between a service user that subscribes to a notification web service offered in accordance with the invention using the embodiment of the system shown in Fig. 5.

It will be noted that throughout the appended drawings, like features are identified by like reference numerals.

### DETAILS

The system in accordance with the invention exposes a synchronous web service as a notification web service to subscribers who subscribe to the notification web service. One embodiment of the system in accordance with the invention includes a subscription manager that is responsible for accepting incoming subscriptions and passing on data to a polling manager for processing. The polling manager has a queue of web services that it polls in accordance with information received from the subscription manager. A filter manager receives responses forwarded by the polling manager and compares the responses to a notification filter expression that was obtained from the subscription manager. Any response message that pass the notification filter expression is forwarded to a notification manager. The notification manager sends notification messages to the user containing information extracted from the response message.

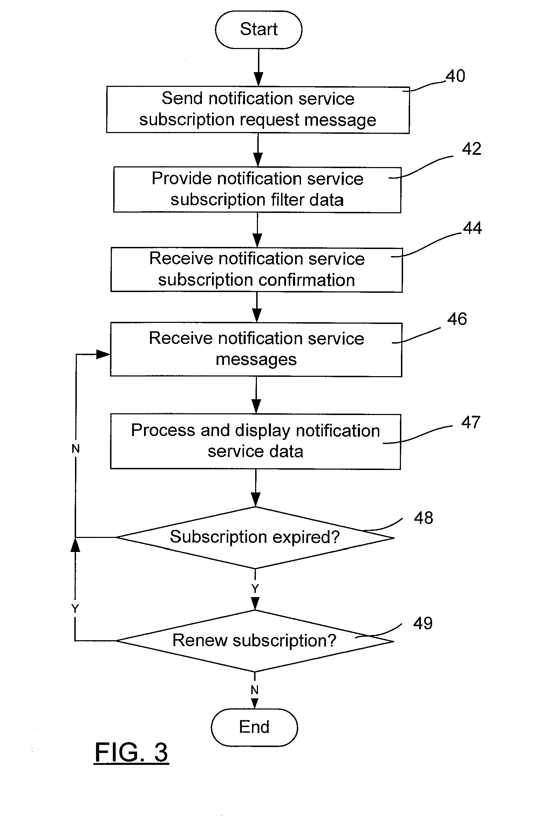

Fig. 2 is a block diagram of a wireless device 20 in accordance with the invention. The wireless device 20 includes a network connection interface 22 that is well known in the art and used to communicate wirelessly with the public domain carrier 12. The wireless device further includes a user interface 24, which may be a keypad, a touch sensitive screen, voice recognition software, or any other user interface for wireless devices. A device infrastructure 22 includes memory, processor(s), peripheral ports, keypad, display and other hardware components required to support the functionality of the wireless device 20. A runtime environment 28 supports a plurality of user applications 30a, 30n that provide user services available through the wireless device 20. In accordance with the invention, the runtime environment 28 is further provisioned with one or more notification subscription service modules 32a, 32y as will be explained below with reference to Figs. 3-6.

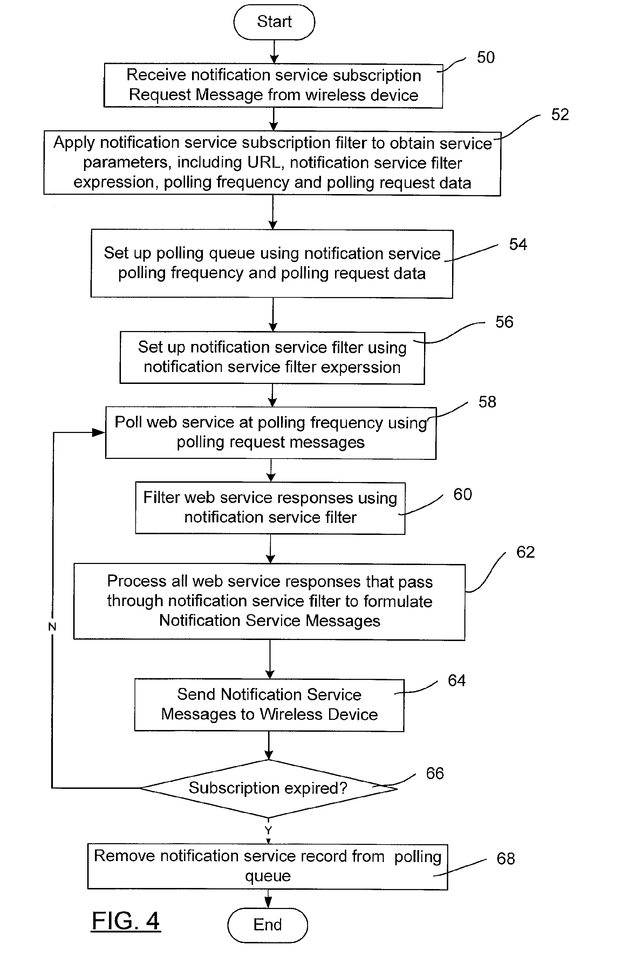

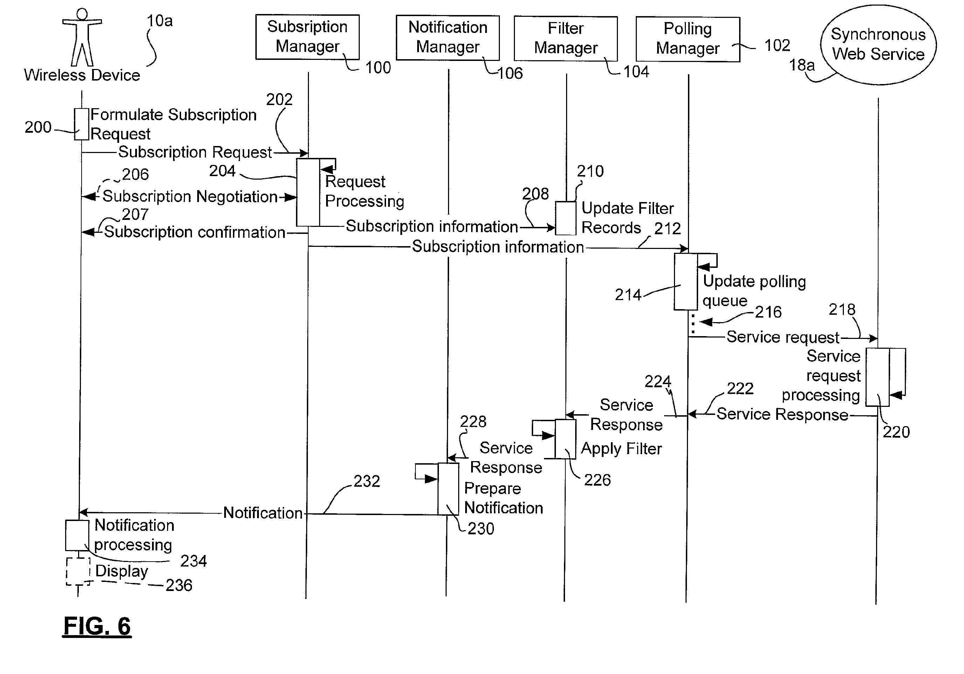

Fig. 3 is a flow diagram showing principle steps in a method in accordance with the invention performed by a web service user operating the wireless device shown in Fig. 2. In step 40, the web service user formulates and sends a subscription request message in order to subscribe to a predetermined notification service offered by a notification service provider. As will be explained below with reference to Figs. 4 and 6, on receipt of the subscription request message the notification service provider applies a subscription filter to obtain subscription filter data including: the notification web service Universal Resource Locator (URL) for the synchronous web service exposed as a notification web service; a notification filter, which is an expression that determines when a notification should be sent to the notification service subscriber; a polling time interval, which determines a frequency at which information requests are sent to the synchronous web service; request data, which is an expression that includes any data that should be sent to the synchronous web service when sending each information request; and, optionally a subscription end time that determines when the subscription expires. This information is supplied by the service user and may be defaulted by one of the service subscription modules 32a, 32y shown in Fig. 2.

After the service provider has confirmed that all required subscription filter data has been received, and that the data conforms with predetermined value ranges, the service user receives a subscription confirmation message (step 44). Thereafter, when a response message received by the notification service provider meets a predetermined criteria, a notification message is sent to the wireless device 20 (step 46). The notification message is processed and, if appropriate, notification data is displayed using the device infrastructure 26 shown in Fig. 2 (step 47). The wireless device 20 then determines whether the subscription has expired (step 48) by consulting an appropriate subscription service module 32a,32y, and if the subscription has not expired the wireless device 20 awaits receipt of notification messages by branching back to step 46. If the subscription has expired, or is about to expire, the wireless device 20 determines whether the subscription should be renewed (step 49). If so, the wireless device 20 renews the subscription, for example by sending a subscription renewal request to the service provider (not shown). The subscription renewal request may specify a renewed subscription end time. If the subscription is renewed, the process branches back to step 46. Otherwise, the process ends.

Fig. 4 is a flow diagram showing principle steps performed by the notification service provider when providing a notification service in accordance with the invention using a synchronous web service as a source of notification information.

In step 50, a service provider receives the subscription message from wireless device 20, as described above with reference to Fig. 3. The service provider applies the subscription filter to obtain service parameters including the URL of the synchronous web service; the notification filter expression; the polling frequency; the polling request data; and, optionally the subscription end time (step 52) as explained above. The service provider then sets up a polling queue using the polling frequency and polling request data (step 54). The service provider also sets up a notification filter using the notification filter expression supplied by the service subscriber. The service provider then polls the synchronous web service(step 58) at the polling frequency specified by the service subscriber using polling request messages formulated using the polling request data supplied in step 52. The service provider filters the web service responses (step 60) using the notification filter expression supplied in step 52. Each filter is used to formulate a notification message (step 62). The notification messages are sent to the wireless device 20 (step 64). In step 66 the service provider determines whether the service subscriber's subscription has expired using the subscription end time, if supplied, or a default subscription duration if a subscription end time was not supplied by the subscriber in the subscription data. If the subscription has expired and a renewal request is not received within a predetermined default time period, the service subscriber record is removed from the polling queue (step 68) and the process ends. Otherwise, the process branches back to step 58 and another service request is sent to the synchronous web service at a next polling time for the service subscriber.

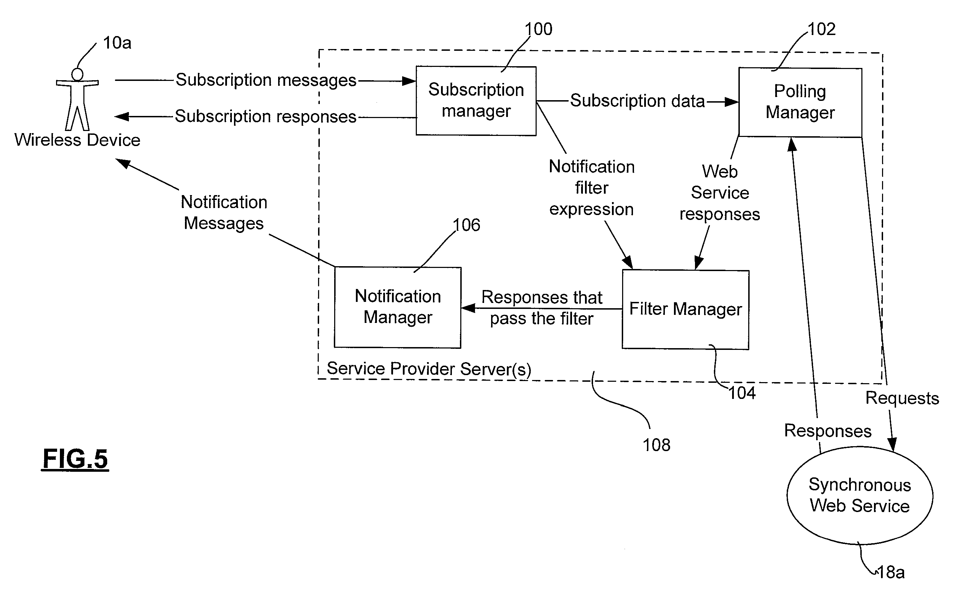

Fig. 5 is a schematic diagram of one embodiment of the system in accordance with the invention for carrying out the process described above with reference to Figs. 3 and 4. The embodiment shown in Fig. 5 includes a subscription manager 100 that receives subscription messages from a web service user operating wireless device 20. The subscription manager sends subscription responses to the wireless device 20 to acquire subscription data, confirm subscriptions and notify subscribers of subscription expiry, etc. As explained above, the subscription manager acquires subscription data including the synchronous web service URL; the notification filter data which provides an expression that determines when notification should be sent to the service user; polling frequency, which may be specified as a time lapse between polling messages sent to the synchronous web service; request message data, which is an expression that includes any data that should be incorporated in any information request message sent to the synchronous web service when a polling step is performed, and, optionally a subscription end time.

As will be explained below with reference to Fig. 6, the subscription manager 100 sends the required subscription data to a polling manager 102. The polling manager 102 creates and maintains a queue of synchronous web services that it must poll to obtain notification information. The polling manager 102 iteratively checks the polling queue(s) to determine when each request message should be sent to the synchronous web service 18a. When a response is returned to the polling manager 102, the polling manager 102 forwards the response to a filter manager 104.

The filter manager 104 receives the web service responses from the polling manager 102 and compares each response with the notification filter expression received from the subscription manager 100 to determiner whether the web service response passes through the notification filter expression, i.e. whether the web service response contains information that meets at least one criteria specified by the service subscriber for sending a notification message to the wireless device 20. Any response that pass through the notification filter is forwarded to the notification manager 106. The notification manager processes the response to create a notification message and the notification message is forwarded to the wireless device 20, which processes the message as described above with reference to Fig. 3.

As will understood by those skilled in the art, the subscription manager 100, polling manager 102, filter manager 104 and notification manager 106 may be instantiated on one or more service provider servers 108, e.g. the application gateway 14 (Fig. 1).

Fig. 6 is a message flow diagram illustrating principle steps performed in providing a notification service in accordance with the invention. In step 200, a service user operating wireless device 20 formulates a subscription request message in step 200. The subscription request message is forwarded to the subscription manager 100 in step 202. The subscription manager 100 processes the subscription request message (step 204) as described above with reference to Figs. 4 and 5. During subscription request processing, subscription negotiation (step 206) may occur. During subscription negotiation, the subscription manager 100 sends subscription responses to the wireless device 10a and receives subscription messages from the wireless device 10a. After subscription request processing is completed, subscription manager 100 sends a subscription confirmation message (step 207) to the wireless device 10a. The subscription manager 100 also forwards subscription information (step 208) to the filter manager 104 as explained above with reference to Fig. 5. On receipt of that information, the filter manager 104 updates its notification filter records (step 210) to include the notification filter expression acquired by the subscription manager in steps 202 or 206. The subscription manager 100 also forwards subscription information to the polling manger 102 (step 212). The polling manager uses the subscription information to update the polling queue in step 214, as likewise described above with reference to Fig. 5. The polling manager 102 then examines the polling queue(s) and after a predetermined period of time (step 216) determined by the polling frequency specified by the service user in steps 202 and/or 206, the polling manager formulates a service request message using the polling request data provided by the service user and forwards the service request message (step 218) to the synchronous web service 18a. Upon receipt of the service request message, the synchronous web service 18a performs service request processing in a manner well known in the art (step 220). When processing is complete, the synchronous web service 18a returns a service response message (step 222) to the polling manager 102.

The polling manager 102 forwards the service response message to the filter manager 104 (step 224). The filter manager applies the notification filter expression to the filter response message (step 226). In this example, the service response message passes through the notification filter expression. Each service response message that passes through the notification filter expression is forwarded to the notification manager 106. In this example, the service response message is forwarded in step 228. On receipt of the service response message, the notification manager processes the service response message to prepare a notification message (step 230) and the notification manager 106 forwards the notification message in step 232 to the wireless device 20 (step 232). On receipt of the notification message, the wireless device 10a performs notification message processing (step 234). The notification message processing may require a display of information (step 236) to the service user, using methods and criteria well known in the art.

The methods and systems in accordance with the invention therefore provide a significantly more efficient method of exposing synchronous web services as notification web services. The system in accordance with the invention can simultaneously serve a plurality of notification subscribers and can, likewise, poll a plurality of synchronous web services to provide notification services in accordance with the invention. As will be understood by those skilled in the art, the system shown in Fig. 5 is exemplary only and other hardware configurations may be used to practice the methods described above with reference to Figs. 3 and 4.

The embodiments of the invention described above are intended to be exemplary only. The scope of the invention is therefore intended to be limited solely by the scope of the appended claims.

## Claims

1. A method for exposing a synchronous web service (18a) as a notification web service, comprising:
polling (218) the synchronous web service from a notification service provider server (108) at a predetermined frequency using predetermined request data to obtain response messages (222) from the synchronous web service;
determining at the notification service provider server whether a response message received from the synchronous web service meets a predefined criteria; and
forwarding from the notification service provider server a notification message (232) to the subscriber (10a) each time a response message meets the predefined criteria.

2. The method as claimed in claim 1 wherein the predetermined frequency is determined by subscription data provided by a subscriber (10a) to the notification service provider server (108).

3. The method as claimed in claim 1 or claim 2 wherein the predetermined request data comprises subscription request data provided by a subscriber (10a) to the notification service provider server (108).

4. The method as claimed in any one of claims 1 to 3 further comprising:
receiving at the notification service provider server (108) a subscription request message (202) from a web service user (10a) requesting a subscription to the notification web service;
sending a response message (206) to the subscription request message, the response message requesting subscription data not included in the subscription request message.

5. The method as claimed in any one of claims 1 to 4 wherein the step of determining comprises applying (226) a notification filter expression to each response message (222) received, the notification filter expression determining whether the response message meets the predetermined criteria.

6. The method as claimed in any one of claims 1 to 5 wherein forwarding the notification message (232) comprises processing (230) the response message (222) to formulate the notification message.

7. The method as claimed in any preceding claim wherein prior to polling (218) the synchronous web service (18a) the method comprises creating (214) a polling queue using polling frequency data received from the service subscriber (10a).

8. The method as claimed in claim 7 further comprising formulating a request message to be sent to the synchronous web service (18a) when polling (218), the request message being formulated using request data provided by the service subscriber (10a) during a subscriber registration process.

9. The method as claimed in any preceding claim further comprising determining (66) at predetermined intervals whether a subscriber's (10a) subscription to the notification web service (18a) has expired.

10. A system for exposing a synchronous worldwide web service (18a) as a notification web service, comprising at least one notification service provider server (208) that is arranged to send service request messages (218) to the synchronous web service and to receive service responses (222) from the synchronous web service, and to send notification messages (232) to a service subscriber (10a) based on the responses received from the synchronous web service.

11. The system as claimed in claim 10 further comprising:
a subscription manager (100) instantiated on one of the at least one notification service provider server (108), the subscription manager being arranged to receive subscription messages from a service subscriber (10a) and to send subscription responses to the service subscriber, and to forward subscription information to a polling manager (102) also instantiated on one of the at least one notification service provider servers, to permit the polling manager to create the service request messages (218).

12. The system as claimed in claim 11 further comprising a filter manager (104) instantiated on one of the at least one notification service provider servers (108), the filter manager being arranged to receive a notification filter expression from the subscription manager (100) and to receive the response messages (222) from the polling manager (102), and to apply the notification filter expression to the response messages to determine when a response message is to be forwarded to the service subscriber (10a).

13. The system as claimed in claim 12 wherein the filter manager (104) is further arranged to send the response messages (222) that pass the notification filter expression to the notification manager (106), and the notification manager is arranged to create the notification messages (232) and to forward the notification messages to the service subscriber (10a).

14. The system as claimed in claim 10, comprising:
a subscription manager (100) that is arranged to receive subscription messages (202) from a service subscriber (10a) and to send subscription responses (206,207) to the service subscriber, and to forward subscription information (208,212) to a polling manager (102) to permit the polling manager to create service request messages (218);
the polling manager being arranged to send the service request messages to the synchronous web service and to receive service responses (222) from the synchronous web service (18a);
a filter manager (104) that is arranged to determine when a response message is to be forwarded to the service subscriber; and
a notification manager (106) that is arranged to receive selected response messages from the filter manager and to forward notification messages (232) to the service subscriber.

15. The system as claimed in claim 14 wherein the subscription manager (100), the polling manager (102), the filter manager (104) and the notification manager (106) are all instantiated on one notification service provider server (108).

16. The system as claimed in claim 14 wherein the subscription manager (100), the polling manager (102), the filter manager (104) and the notification manager (106) are instantiated on at least two separate notification service provider servers (108).

17. The system as claimed in any one of claims 14 to 16 wherein the polling manager (102) is arranged to create (214) a polling queue of synchronous web services (18a) that it polls (218), and the polling manager is arranged to iteratively parse the polling queue to determine when a request message (218) is to be sent to a one of the synchronous web services.

18. The system as claimed in any one of claims 14 to 17 wherein the filter manager (104) is arranged to receive a notification filter expression from the subscription manager (100) and to apply the notification filter expression to the response messages (222) to determine when a response message is to be sent to the notification manager (106).

19. The system as claimed in claim 18 wherein the subscription manager (100) is arranged to receive the notification filter expression from the service subscriber (10a).

20. The system as claimed in any one of claims 14 to 19 wherein the subscription manager (100) is arranged to maintain a record of when a subscription will expire.

21. A machine readable medium comprising program code means which wneh being executed by a processor of a notification service provider server (208) causes said server to perform the method of any one of claims 1 to 9.

## Amended claims

### Amended claims in accordance with Rule 86(2) EPC.

**1.** A method for exposing a synchronous web service (18a) as a notification web service, comprising:
polling (218) the synchronous web service from a notification service provider server (108) at a predetermined frequency using predetermined request data to obtain response messages (222) from the synchronous web service wherein the predetermined request data comprises subscription request data provided by a subscriber (10a) to the notification service provider server (108);
determining at the notification service provider server whether a response message received from the synchronous web service meets a predefined criteria; and
forwarding from the notification service provider server a notification message (232) to the subscriber (10a) each time a response message meets the predefined criteria.

**2.** The method as claimed in claim 1 further comprising:
receiving at the notification service provider server (108) a subscription request message (202) from a web service user (10a) requesting a subscription to the notification web service;
sending a response message (206) to the subscription request message, the response message requesting subscription data not included in the subscription request message.

**3.** The method as claimed in claim 1 or claim 2 wherein the step of determining comprises applying (226) a notification filter expression to each response message (222) received, the notification filter expression determining whether the response message meets the predetermined criteria.

**4.** The method as claimed in any one of claims 1 to 3 wherein forwarding the notification message (232) comprises processing (230) the response message (222) to formulate the notification message.

**5.** The method as claimed in any preceding claim wherein prior to polling (218) the synchronous web service (18a) the method comprises creating (214) a polling queue using polling frequency data received from the service subscriber (10a).

**6.** The method as claimed in claim 5 further comprising formulating a request message to be sent to the synchronous web service (18a) when polling (218), the request message being formulated using request data provided by the service subscriber (10a) during a subscriber registration process.

**7.** The method as claimed in any preceding claim further comprising determining (66) at predetermined intervals whether a subscriber's (10a) subscription to the notification web service (18a) has expired.

**8.** A system for exposing a synchronous worldwide web service (18a) as a notification web service, comprising at least one notification service provider server (208) that is arranged to send service request messages (218) to the synchronous web service and to receive service responses (222) from the synchronous web service, and to send notification messages (232) to a service subscriber (10a) based on the responses received from the synchronous web service; and
a subscription manager (100) instantiated on one of the at least one subscription service provider server (108), the subscription manager receiving subscription messages from a service subscriber (10a) and sending subscription responses to the service subscriber, and forwarding subscription information to a polling manager (102) also instantiated on one of the at least one notification service provider servers, to permit the polling manager to create the service request messages (218).

**9.** The system as claimed in claim 8 further comprising a filter manager (104) instantiated on one of the at least one notification service provider servers (108), the filter manager being arranged to receive a notification filter expression from the subscription manager (100) and to receive the response messages (222) from the polling manager (102), and to apply the notification filter expression to the response messages to determine when a response message is to be forwarded to the service subscriber (10a).

**10.** The system as claimed in claim 9 wherein the filter manager (104) is further arranged to send the response messages (222) that pass the notification filter expression to the notification manager (106), and the notification manager is arranged to create the notification messages (232) and to forward the notification messages to the service subscriber (10a).

**11.** The system as claimed in claim 9 or claim 10 wherein the subscription manager (100), the polling manager (102), the filter manager (104) and the notification manager (106) are all instantiated on one notification service provider server (108).

**12.** The system as claimed in claim 9 or claim 10 wherein the subscription manager (100), the polling manager (102), the filter manager (104) and the notification manager (106) are instantiated on at least two separate notification service provider servers (108).

**13.** The system as claimed in any one of claims 9 to 12 wherein the polling manager (102) is arranged to create (214) a polling queue of synchronous web services (18a) that it polls (218), and the polling manager is arranged to iteratively parse the polling queue to determine when a request message (218) is to be sent to a one of the synchronous web services.

**14.** The system as claimed in any one of claims 9 to 13 wherein the filter manager (104) is arranged to receive a notification filter expression from the subscription manager (100) and to apply the notification filter expression to the response messages (222) to determine when a response message is to be sent to the notification manager (106).

**15.** The system as claimed in claim 14 wherein the subscription manager (100) is arranged to receive the notification filter expression from the service subscriber (10a).

**16.** The system as claimed in any one of claims 9 to 15 wherein the subscription manager (100) is arranged to maintain a record of when a subscription will expire.

**17.** A machine readable medium comprising program code means executable by a processor of a notification service provider server (208) causes said server to perform the method of any one of claims 1 to 7.
